Europäisches Patentamt

European Patent Office

Office européen des brevets

(19)

(11) Publication number: **0 432 766 A2**

# EUROPEAN PATENT APPLICATION

(12)

(21) Application number: 90123994.7

(22) Date of filing: **12.12.90**

(51) Int. Cl.⁵ **B60R 21/20**, C08L 23/04

(30) Priority: **13.12.89 US 449801**

(43) Date of publication of application:
**19.06.91 Bulletin 91/25**

(84) Designated Contracting States:
**AT BE CH DE FR GB IT LI NL SE**

(71) Applicant: **UNION CARBIDE CHEMICALS AND PLASTICS COMPANY, INC.**
**39 Old Ridgebury Road**
**Danbury Connecticut 06817-0001(US)**

(72) Inventor: **Nicholas, Antionios**
**46 Wilshire Drive**
**Belle Meade, New Jersey 08502(US)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8 W-8000 München 40(DE)**

(54) **Air bag deployment door.**

(57) An automobile air bag deployment door which is fabricated from a composition comprising at least about 25% by weight based on the weight of the composition of an ethylene copolymer containing ethylene and at least one alpha-olefin having 4 to 8 carbon atoms, said copolymer having a density in the range of about 0.88 to about 0.913 grams per cubic centimeter and a melt index in the range of about 0.1 to about 10 grams per 10 minutes.

EP 0 432 766 A2

## AIR BAG DEPLOYMENT DOOR

The present invention relates to automobile air bag deployment doors and more particularly to automobile air bag Deployment Doors which resist cracking and fragmentation at extremely low temperatures upon activation of the air bag system.

Over the last few years, automobile air bags are finding increasing commercial usage as an essential safety device for providing comprehensive crash protection to drivers and passengers of automobiles. To that effect, considerable effort has been directed towards the development of high performance materials and components in order to meet the performance requirements of air bag systems.

A key design parameter in current automobiles is the ability to start-up and operate at temperatures as low as about -40° F. Consequently, car components such as air bags must also be functional at these low temperatures.

A critical element affecting the overall performance of automobile air bag systems is the air bag deployment door. This is the door that, once the air bag inflation process is triggered, it allows the air bag to exit the canister and into the car interior where it contacts the automobile passenger(s). In most systems, the pressure of the inflating air bag is the driving force for opening the door. The door is generally designed with "weak" points that separate under pressure and allow the air bag to enter the car interior. These deployment door/air bag assemblies can be mounted in front of the passengers and/or in door panels, seat backs, etc. Depending on the specific design and location of the air bag system (interior, exterior, laminated, foam skin, etc), the air bag door may or may not be visible to the passenger.

As might be expected, the air bag inflation process is a very rapid one, in the order of milliseconds. To permit the bag to pass through the door, the door must also be capable of opening at about the same speed. This instantaneous deployment, however, puts enormous stresses on the unopened door, particularly at low temperatures. With most of the conventionally usable polymeric materials (polyvinyl chloride, high density polyethylene, polyester, etc), the combination of low temperature and high impact have caused the doors to fracture and/or fragment particularly at low temperatures, thus creating serious safety hazard to passengers.

It would therefore be desirable to fabricate a door from a composition which would permit the door to be opened at low temperatures without fracturing and/or without creating fragments which would be dangerous to passengers. ·

Broadly contemplated, the present invention provides an automobile air bag deployment door which is fabricated from a composition comprising at least about 25% by weight based on the weight of the composition of an ethylene copolymer containing ethylene and at least one alpha-olefin having 4 to 8 carbon atoms, said copolymer having a density in the range of about 0.88 to about 0.913 grams per cubic centimeter and a melt index in the range of about 0.1 to about 10 grams per 10 minutes.

These very low density ethylenes are commonly referred to as VLDPE. The preferred composition is one containing about 50 to 100% of VLDPE based on the weight of the composition. preferred densities are those within the range of about 0.900 to 0.910. The most preferred composition is one containing about 75% to about 100% of an ethylene-butene or hexene copolymer having a density in the range of about 0.905 to 0.910 and a melt index in the range of about 0.5 to about 6.

The VLDPE is a copolymer of ethylene and at least one alpha-olefin having 4 to 8 carbon atoms which can typically be produced in the presence of an activated supported catalyst containing magnesium, titanium, a hydrocarbyloxy moiety (optional), a halogen, and an electron donor, each in catalytically effective amounts. The copolymer can be prepared as disclosed in U.S. Patent No. 4,302,565 issued on November 24, 1981, which is incorporated herein by reference. The VLDPE can have a density in the range of about 0.88 to about 0.913 gram per cubic centimeter and preferably has a density in the range of about 0.900 to about 0.910 gram per cubic centimeter. The melt index is determined as above and can be in the range of about 0.1 to about 10 grams per 10 minutes and is preferably in the range of about 0.5 to about 6 grams per 10 minutes. The VLDPE is present in the composition in an amount of at least about 25% percent by weight based on the total weight of the composition, and is preferably present in an amount of about 50 to about 100 percent by weight based on the weight of the composition.

If desired, the VLDPE copolymer of the instant invention can be blended with other materials such as homopolymers, copolymers or terpolymers of ethylene and at least one alpha-olefin having from 4 to 10 carbon atoms, either of medium or high density i.e., above 0.913 gms/cc. These copolymers can be present in the composition in amounts of about 75% to about 0% based on the weight of the compositions.

Conventional additives, which can be introduced into the VLDPE composition or into the blend, are exemplified by antioxidants, ultraviolet absorbers, antistatic agents, pigments, dyes, nucleating agents, fillers, slip agents, fire retardants, plasticizers, processing aids, lubricants, stabilizers, smoke inhibitors, viscosity control agents and crosslinking agents, catalysts and boosters.

The above composition can be utilized to fabricate automobile air bag deployment doors by conventional procedures such as by injection molding, thermoforming, blow molding, continuous extrusion, compression molding and like techniques well-known to the art. In addition, the automobile air bag deployment door can be co-fabricated and/or post-fabrication treated (machined, embossed, laminated, co-extruded, etc.) with other materials utilizing conventional procedures known to those skilled in the art.

The following examples will illustrate the present invention:

## EXAMPLE 1
### PREPARATION OF VLDPE

The VLDPE is typically prepared as follows:

Into a 12 liter flask equipped with a mechanical stirrer are placed 41.8 grams (0.439 mol) anhydrous $MgCl_2$ and 2.5 liters tetrahydrofuran (THF). To this mixture, 27.7 grams (0.184 mol) of $TiCl_4$ is added dropwise over 1/2 hour. It may be necessary to heat the mixture to 60° C for about 1/2 hour in order to completely dissolve the material.

Five grams of porous silica dehydrated at 800° C and optionally treated with 4 to 8 weight percent triethyl-aluminum are added to the above solution and stirred for 1/4 hour. The mixture is dried with a $N_2$ purge at 60° C for about 3 to 5 hours to provide a dry, free flowing powder having the particle size of the silica. The absorbed precursor composition has the formula

$TiMg_{3.0}Cl_{10}(THF)_{6.7}$

The desired weight of impregnated precursor composition and activator compound e.g. triethylaluminum, is added to a mixing tank with a sufficient amount of anhydrous aliphatic hydrocarbon diluent such as isopentane to provide a slurry system.

The activator compound and precursor compound are used in such amounts as to provide a partially activated precursor composition which has an Al/Ti ratio of up to 10:1 and preferably of 4 to 8:1.

The contents of the slurry system are then thoroughly mixed at room temperature and at atmospheric pressure for about 1/4 to 1/2 hour. The resulting slurry is dried under a purge of dry inert gas such as nitrogen or argon, at atmospheric pressure and at a temperature of 65° ± 10° C to remove the hydrocarbon diluent. This process usually requires about 3 to 5 hours. The resulting catalysts is in the form of a partially activated precursor composition which is impregnated within the pores of the silica. It is injected into, and fully activated within, the polymerization reactor.

When additional activator compound is fed to the polymerization reactor for the purpose of completing the activation of the precursor composition, it is fed into the reactor as a dilute solution in a hydrocarbon solvent such as isopentane. This dilute solution contains about 5 to 30 percent by volume of the activator compound.

The activator compound is added to the polymerization reactor so as to maintain the Al Ti ratio in the reactor at a level of about 10 to 400:1 and preferably of 15 to 60:1.

The catalyst system contains 14.5 weight percent of precursor composition. It is partially activated with triethylaluminum so as to provide the silica precursor composition with an Al Ti mol ratio of 5:1. The completion of the activation of the precursor composition in the polymerization reactor is accomplished with a 5 percent by weight solution of triethylaluminum in isopentane so as to provide a completely activated catalyst in the reactor with an Al/Ti mol ratio of 25 to 30.

Ethylene can then be copolymerized with either butene or hexene monomer depending on the desired copolymer to be produced. The reaction is conducted, after equilibrium is reached, for 1 hour at 85° C, and under a pressure of 300 psig, a gas velocity of about 3 to 6 times Gmf, and a space time yield of about 4.4 to 6.3 in a fluid bed reactor system.

## EXAMPLE 2

An ethylene hexene copolymer produced as described in Example 1 and available from Union Carbide Chemicals and Plastics Company Inc., under the code designation DEFD-1569, was formulated into a composition containing about 99.8% ethylene/hexene. The density of the copolymer was 0.910 grams/cc and the copolymer had a melt index of 1.0 grams per 10 minutes. The composition was injection molded to produce rectangular deployment doors similar in design to those conventionally available. The door was then mounted in front of an air bag canister module and the whole assembly was conditioned for several hours at -40° F. After temperature conditions had stabilized, the air bag inflation/explosion process was triggered and the air bag instantaneously ruptured through the door. Inspection of the open door revealed that the region of rupture had successfully separated without cracks and/or fragmentation.

## EXAMPLE 3

An ethylene/butene copolymer produced as described in Example 1 and available from Union Carbide Chemicals and Plastics Company Inc., under the code designation DEDA-1138, was formulated into a composition containing about 99.7% ethylene/ butene. The density of the copolymer was 0.900 grams/cc and the copolymer had a melt index of 0.5 grams per 10 minutes. The composition was injection molded to produce rectangular deployment doors similar in design to those conventionally available. The door was then mounted in front of an air bag/canister module and the whole assembly was conditioned for several hours at -40° F. After temperature conditions had stabilized, the air bag inflation/explosion process was triggered and the air bag instantaneously ruptured through the door. Inspection of the open door revealed that the region of rupture had successfully separated without cracks and/or fragmentation.

**Claims**

1. An automobile air bag deployment door which is fabricated from a composition comprising at least about 25% by weight based on the weight of the composition of an ethylene copolymer containing ethylene and at least one alpha-olefin having 4 to 8 carbon atoms, said copolymer having a density in the range of about 0.88 to about 0.913 grams per cubic centimeter and a melt index in the range of about 0.1 to about 10 grams per 10 minutes.

2. An automobile air bag deployment door according to Claim 1, wherein said composition contains from about 50 to about 100% by weight based on the weight of the composition of said ethylene copolymer.

3. An automobile air bag deployment door according to claim 2, wherein said composition contains from about 75% to about 100% by weight based on the weight of the composition of said ethylene copolymer.

4. An automobile air bag deployment door according to any one of claims 1 to 3, wherein the density of said copolymer is within the range of about 0.900 to about 0.910 grams per cubic centimeter and wherein the melt index is within the range of about 0.5 to about 6.0 gram per 10 minutes.

5. An automobile air bag deployment door according to any one of claims 1 to 4, wherein the density of said copolymer is within the range of about 0.905 to about 0.910 grams per cubic centimeter.

6. An automobile air bag deployment door according to any one of claims 1 to 5, wherein said ethylene copolymer is a copolymer comprising ethylene and butene or hexene.

7. An automobile air bag deployment door according to any one of claims 1 to 6, wherein said composition includes about 75% to about 0% based on the weight of the composition of homopolymers, copolymers or terpolymers of ethylene and at least one alpha-olefin having 4 to 10 carbon atoms and which are medium or high density copolymers.

8. An automobile air bag deployment door according to any one of claims 1 to 7, further including one or more of an additive such as an antioxidant, ultraviolet absorbers, antistatic agent, filler, slip agent, fire retardant, plasticizer, processing aid, lubricant, stabilizer, smoke inhibitor, viscosity control agent, crosslinking agent, catalyst and booster.